(19) Europäisches Patentamt
European Patent Office
Office européen des brevets

(11) **EP 2 845 780 A1**

(12) **DEMANDE DE BREVET EUROPEEN**

(43) Date de publication:
**11.03.2015 Bulletin 2015/11**

(51) Int Cl.:
*B60W 40/09* (2012.01)     *B60W 50/14* (2012.01)
*B60R 16/023* (2006.01)    *B60W 50/00* (2006.01)

(21) Numéro de dépôt: **14179549.2**

(22) Date de dépôt: **01.08.2014**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(30) Priorité: **02.08.2013 FR 1357741**

(71) Demandeur: **Savecode**
**75001 Paris (FR)**

(72) Inventeur: **Meunier, Christophe Pierre Albert**
**94300 Vincennes (FR)**

(74) Mandataire: **Cabinet Camus Lebkiri**
**25, Rue de Maubeuge**
**75009 Paris (FR)**

(54) **Procédé d'assistance à la conduite, procédé de génération d'un indicateur de trajet,
équipement d'aide à la conduite, système associé.**

(57)     Le procédé d'assistance à la conduite d'un véhicule, caractérisé en ce qu'il comprend :
• Une configuration permettant de définir un profil de véhicule ($P_V$), ledit profil de véhicule comprenant au moins :
  ▪ un identifiant permettant de discriminer un modèle de véhicule ;

• Une acquisition d'un premier ensemble de relevés de positions du véhicule à des instants de mesure ($T_C$), appelés « période de capture », sur une première portion ($P_1$) de trajet ;
• Une détermination sur ladite première portion ($P_1$) :
  ▪ d'un nombre d'accélérations et de décélérations du véhicule dépassant respectivement un premier ($S_1$) et un second ($S_2$) seuil prédéfini ;
  ▪ d'une vitesse moyenne ($V_M$) du véhicule ;

• Une déduction d'un profil de portion ($T_i$) à partir de la vitesse moyenne ($\{V_M\}_{P1}$) du véhicule calculée sur la première portion de trajet ($P_1$) ;
• Un calcul d'un coefficient pondérateur ($I_P$) permettant une génération d'un indicateur de conduite ($I_C$).

FIG.1

**Description**

**DOMAINE TECHNIQUE DE L'INVENTION**

La présente invention se rapporte au domaine technique des procédés et dispositifs d'aide et d'assistance à la conduite d'un véhicule automobile. Plus particulièrement, le domaine de la présente invention concerne les procédés d'assistance permettant à un conducteur d'améliorer sa conduite en prenant en considération des indicateurs écologiques et de sécurité.

**ARRIERE PLAN TECHNOLOGIQUE DE L'INVENTION**

Généralement, les dispositifs d'aide à la conduite actuels permettent d'assister un conducteur lors de nombreuses phases de la conduite.
Par exemple, lors de manoeuvres particulières, telle que l'engagement d'une marche arrière, un signal sonore peut aider le conducteur à accomplir sa manoeuvre en fonction de la distance séparant son véhicule d'un obstacle.
Dans d'autres applications, il existe des dispositifs de géolocalisation, qui lorsqu'ils sont couplés à une base de données cartographiques, permettent de guider le conducteur et de l'accompagner dans sa prise de décision d'itinéraire lors de la conduite.
Il existe également des dispositifs, par exemple intégrés au tableau de bord ou autonomes, qui permettent d'alerter le conducteur d'un véhicule du trafic, d'accidents ou de perturbations sur un itinéraire présélectionné. Ces dispositifs permettent de proposer des itinéraires alternatifs ou encore d'évaluer un temps de conduite pour arriver à une destination.
Certains dispositifs prennent en compte l'amélioration de l'allure de la conduite, tels que par exemple des limiteurs de vitesses ou des dispositifs électromécaniques permettant d'assister le passage des vitesses.
Certains dispositifs permettent d'évaluer la consommation en carburant d'un véhicule en fonction d'une vitesse moyenne et d'une distance parcourue. Ces dispositifs permettent notamment d'évaluer le coût d'un trajet, ils peuvent par ailleurs prendre en compte l'usure du véhicule.
En revanche, ces dispositifs ne permettent pas d'apprendre à un conducteur ou de le sensibiliser à une conduite optimisant une donnée écologique et de sécurité tel que par exemple la surconsommation de carburant et l'agressivité au volant liée au comportement de conduite.

**DESCRIPTION GENERALE DE L'INVENTION**

L'invention permet de résoudre les inconvénients précités.
Un objet de l'invention concerne un procédé d'assistance à la conduite d'un véhicule, ledit procédé comprend :

- Une configuration permettant de définir un profil de véhicule, ledit profil de véhicule comprenant au moins :

  - un identifiant permettant de discriminer un modèle de véhicule ;
  - un type de carburant ;

- Une acquisition d'un premier ensemble de relevés de positions du véhicule à des instants de mesure, définissant une période de capture, sur une première portion de trajet ;
- Une détermination sur ladite première portion :

  - d'un nombre d'accélérations du véhicule dépassant un premier seuil prédéfini ;
  - d'une vitesse moyenne du véhicule ;

- un calcul d'un coefficient de portion à partir du dénombrement et de la durée des accélérations sur ladite première portion ;
- Une déduction d'un profil de portion à partir de la vitesse moyenne du véhicule calculée sur la première portion de trajet comparée à au moins une donnée du profil véhicule;
- Une pondération d'au moins une donnée du profil de portion de sorte à générer un indicateur de conduite.

Un avantage de la présente invention est de permettre de prendre en compte une attitude de conduite pour générer un indicateur à destination du conducteur d'un véhicule. Ce dernier indicateur lui permet d'améliorer sa conduite pour réduire sa consommation de carburant.
Avantageusement, le procédé comprend le calcul du nombre de décélérations au-delà d'un second seuil en valeur absolue sur la première portion et le calcul du coefficient de portion également en fonction du nombre de décélérations ainsi déterminé.

Un avantage de la prise en compte des décélérations est d'agrémenter l'indicateur par la prise en compte de freinage par exemple brusques ou une faible utilisation du frein moteur. La prise en compte des décélérations au-delà d'un seuil permet de mesurer la non régularité de la courbe de vitesse lors d'un trajet et le coût de leur surconsommation.

Avantageusement le procédé comprend :

- la détermination pour chaque accélération et/ou chaque décélération de leur durée, les périodes de capture étant variables ;
- le calcul du coefficient de portion en prenant en compte les durées de chaque accélération et/ou décélération sur ladite première portion.

Un avantage est de s'affranchir de la non régularité des mesures et donc de s'affranchir du dispositif qui délivre les positions du véhicules. Chaque relevé de position étant horodaté, les mesures sont effectuées sur une échelle de temps relatives par exemple entre deux relevés horodatés.

Avantageusement, le profil de véhicule comprend:

- une quantité de $CO_2$ émis par km et déterminée selon l'identifiant du véhicule ;
- un profil de consommation comprenant un ensemble de consommations moyennes, chaque consommation moyenne étant associée à un type de zone.

Un avantage est d'obtenir un indicateur adapté à la zone géographique de conduite telle que sur une voie rapide ou en ville. Cette prise en compte permet notamment de définir des seuils adaptés à ces zones et de permettre de mesurer un écart vis-à-vis d'une conduite de référence dans ces zones.

Avantageusement, le type de zone est défini par au moins une vitesse cible moyenne d'un véhicule roulant dans ladite zone.

Un avantage est de définir simplement les différents types de zones par un paramètre mesurable par le procédé de l'invention : la vitesse du véhicule. Ce paramètre permet notamment de réduire les calculs.

Avantageusement, l'ensemble de consommations moyennes comprend :

o une première consommation moyenne correspondant à une conduite du véhicule dans un premier type de zone;
o une seconde consommation moyenne correspondant à une conduite du véhicule dans un second type de zone;
o une troisième consommation moyenne correspondant à une conduite du véhicule dans un troisième type de zone, le troisième type de zone étant une zone mixte entre la première zone et la seconde zone.

Un avantage est de prendre en compte des valeurs références de consommation en fonction de la zone géographique dans laquelle le véhicule circule.

Avantageusement, la première zone correspond à une zone urbaine, la troisième zone correspond à une zone de voies rapides et la seconde zone correspond à une zone mixte.

Avantageusement, le profil de véhicule comprend le prix du litre de carburant.

Avantageusement, la définition du profil de véhicule est réalisée par le transfert de données stockées dans un serveur distant vers un terminal utilisateur conçu pour mettre en oeuvre le procédé de l'invention, lesdites données transférées comprenant un type de véhicule, des consommations de carburant définies selon des types de trajet ou des vitesses moyennes de conduite.

Un avantage est de permettre un accès par une connexion réseau à l'ensemble des données du profil du véhicule et de l'environnement de conduite. Une connexion réseau peut facilement être configurée sur un Smartphone par exemple et peut être accessible sur une grande partie du territoire.

Avantageusement, l'acquisition des relevés de positions du véhicule est effectuée au moyen d'un système de positionnement, chacune des positions collectées étant horodatée.

Le système de positionnement peut être un système de positionnement par satellite(s) ou à partir de bornes de téléphonie terrestre ou de bornes wifi ou encore une combinaison de ces systèmes. Ce système de positionnement peut s'appuyer sur un calcul de position par triangulation à partir de bornes de téléphonie mobile, comme par exemple des bornes GSM ou GPRS, 3G, 4G, ou des bornes WIFI ou d'une pluralité de satellites.

Un avantage est d'obtenir des positions du véhicule à partir d'un moyen sans fil et sans contact avec le véhicule. Avantageusement, l'acquisition des relevés de positions du véhicule est effectuée au moyen d'un capteur GPS, chacune des positions collectées étant horodatée.

Un avantage de cette solution est de permettre une collecte simple des positions par un GPS intégré dans de nombreux équipements tels que des Smartphones.

Avantageusement, l'acquisition des relevés de positions est effectuée dans des intervalles de temps inférieurs à la minute.

Avantageusement, l'acquisition des relevés de positions est effectuée dans des intervalles de temps inférieurs à la seconde.

Cette configuration permet d'obtenir des coefficients de portion fiables et précis reflétant une réelle attitude de conduite.

Avantageusement, une vitesse instantanée du véhicule est évaluée à chaque relevé de position en fonction des deux dernières positions du véhicule relevées et de la durée de la période de capture.

Avantageusement, une accélération ou une décélération est mesurée sur chaque période de capture par comparaison de deux vitesses instantanées successives évaluées.

Avantageusement, les valeurs d'accélérations supérieures à un premier seuil sont comptabilisées dans un premier compteur et les valeurs de décélérations inférieures à un second seuil sont comptabilisées dans un second compteur, les valeurs comptabilisées définissant chacune un indice pondérateur.

Avantageusement, les indices pondérateurs définissent sur une première portion un coefficient de portion sur ladite première portion.

Avantageusement, les seuils d'accélérations et de décélérations sont définis selon chaque type de zone.

Un avantage est de prendre en considération les échelles de vitesses et donc les échelles d'accélération et de décélération acceptables dans chaque zone. A titre d'exemple, une voie d'accélération d'une autoroute peut comprendre un seuil d'accélération plus important qu'un seuil défini dans une zone urbaine.

Avantageusement, la vitesse moyenne du véhicule est calculée sur la première portion à partir d'au moins deux relevés horodatés de la première portion. Le calcul de la vitesse moyenne permet d'attribuer à la première portion un type de zone et d'un profil de portion par une comparaison d'une donnée du profil véhicule définie par l'ensemble des vitesses cibles et de la vitesse moyenne mesurée.

Un avantage est que l'attribution d'une zone est effectuée en temps réel en fonction de la vitesse moyenne du véhicule sur une portion. Le procédé de l'invention permet donc la prise en compte d'un changement de zone pendant la conduite sur un trajet. En outre, il est possible d'attribuer une zone en fonction d'un profil local de conduite et pas uniquement selon un critère géographique. Par exemple, un bouchon sur une autoroute peut être perçu comme une zone mixte ce qui reflète une réalité de conduite à ce moment. Cette solution permet de définir des indicateurs reflétant réellement un type de conduite selon un type de circulation.

Avantageusement, un premier indicateur de conduite est calculé sur la première portion à partir :

- d'une première donnée d'un profil de conduite défini par une consommation moyenne identifiée par la détection d'un type de zone d'un profil de portion ;
- du coefficient de portion calculé.

Le coefficient de portion définit un coefficient de pondération de la consommation moyenne identifiée sur ladite première portion.

Le conducteur d'un véhicule peut donc être en mesure d'améliorer cet indicateur avec l'expérience pour réduire sa surconsommation. Le procédé de l'invention comprend donc une vertu pédagogique et de sensibilisation vis-à-vis du conducteur.

Avantageusement, un second indicateur de conduite est calculé sur la première portion à partir :

- d'une seconde donnée d'un profil de conduite défini par un premier prix d'un type de carburant défini par le profil de véhicule ;
- du premier indicateur de conduite,

le premier prix du type de carburant du profil de véhicule étant identifié à partir d'une base de données répertoriant un ensemble de prix de carburants.

Un avantage est de permettre de prendre en compte la variation du prix du carburant et du prix dans le secteur où le véhicule circule.

Avantageusement, la portion de trajet est définie par la distance correspondant à un nombre prédéfini de relevés successifs.

Avantageusement, le procédé d'assistance à la conduite d'un véhicule de l'invention peut définir un objet consistant à proposer un procédé de génération d'un indicateur de trajet.

Ce dernier comprend l'itération d'un procédé d'assistance à la conduite sur un ensemble de portions de trajet, l'ensemble des premiers coefficients de portion définissant un coefficient de trajet.

Un avantage est de générer un indicateur sur un trajet pour éventuellement répertorier les performances de conduite dans une bibliothèque et permettre d'effectuer des statistiques sur l'évolution d'une conduite d'un conducteur.

En outre, cela permet d'un point de vue de la gestion de gérer différents conducteurs d'un même véhicule et d'attribuer des coefficients selon les conducteurs.

Un autre objet de l'invention concerne un produit programme d'ordinateur destiné à être téléchargé sur un équipement d'aide à la conduite apte à mettre en oeuvre les étapes du procédé de de l'invention. Un calculateur permet d'exécuter le programme et d'afficher les indicateurs qui ont été calculés par le procédé de l'invention. Il peut s'agir d'une application téléchargeable par exemple sur un Smartphone, sur une tablette numérique ou sur un dispositif dédié à la navigation automobile.

Un autre objet de l'invention concerne un équipement d'aide à la conduite comprenant :

- un premier composant réseau permettant d'accéder à un réseau de données sans fil ;
- un second composant permettant d'acquérir une position de l'équipement en temps réel, les positions étant régulièrement rafraichies ;
- une mémoire permettant de stocker des données provenant d'au moins un serveur distant ;
- un calculateur permettant d'effectuer les calculs nécessaires à la mise en oeuvre de l'un des procédés de l'invention.

La mémoire permet en outre de stocker au besoin les données de positionnement.

Avantageusement, l'équipement d'aide à la conduite comprend en outre :

- une interface de connexion au BUS CAN du véhicule ou à une autre interface du réseau électronique de bord permettant d'acquérir des données issues du tableau de bord du véhicule dont au moins un enfoncement de pédale d'accélération et/ou une variation du régime de rotation du moteur ou un une donnée propre à la consommation de carburant.

Avantageusement, l'équipement d'aide à la conduite comprend en outre une interface utilisateur permettant de paramétrer le profil de véhicule.

Un autre objet de l'invention concerne un système d'aide à la conduite comprenant :

- un équipement d'aide à la conduite;
- au moins un serveur distant permettant de stocker :

  - un ensemble de profils de consommation ;
  - un ensemble de profils de véhicules ;
  - un ensemble de prix de type de carburant régulièrement mis à jour.

Avantageusement, le système d'aide à la conduite comprend :

- Un tableau de bord d'un véhicule permettant de délivrer une consigne d'accélération et/ou une donnée de débit de carburant consommée.

BREVES DESCRIPTION DES FIGURES

D'autres caractéristiques et avantages de l'invention ressortiront à la lecture de la description détaillée qui suit, en référence aux figures annexées, qui l'illustrent :

- figure 1 : un schéma des principales étapes du procédé de l'invention ;
- la figure 2 : un graphique permettant de déduire les accélérations à partir des relevés de position à des instants réguliers.

DESCRIPTION DETAILLEE

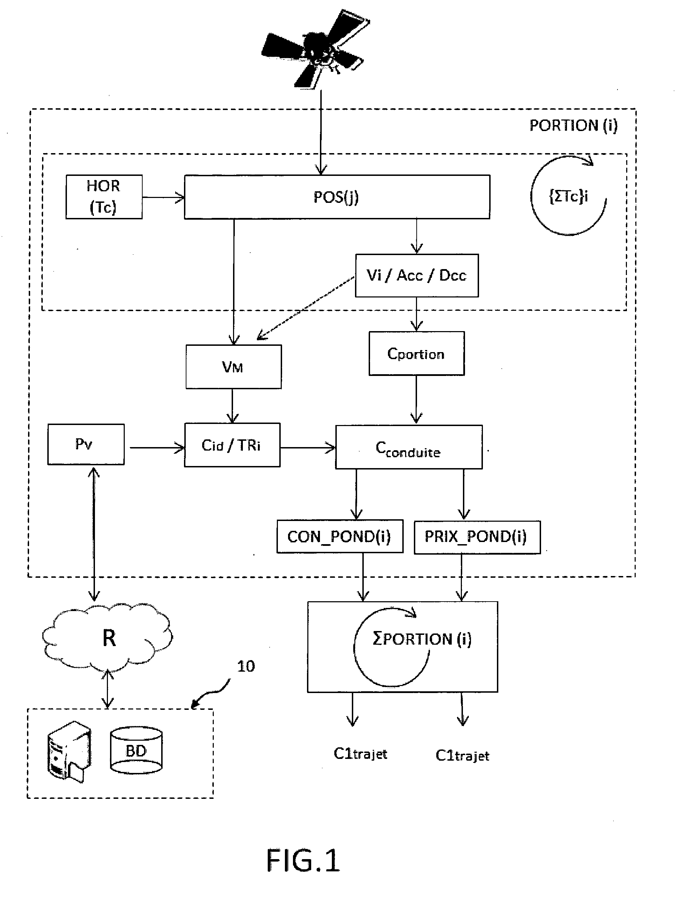

La figure 1 représente un schéma synthétique représentant les principales étapes du procédé d'aide à la conduite de l'invention.

Un tel procédé peut être mis en oeuvre par un équipement de type Smartphone ou téléphone comprenant une ressource permettant d'exécuter les étapes du procédé de l'invention. Une mémoire permet de stocker les informations à traiter.

Selon un autre mode de réalisation, le procédé de l'invention peut être mis en oeuvre par un serveur distant qui reçoit d'un équipement des événements / positions horodatées. Les principales étapes du procédé sont alors réalisées par le serveur qui retourne en fin de trajet les scores calculés lors du trajet. Dans ce mode de réalisation, les relevés sont émis par un équipement par paquets via une connexion réseau sans fil.

Dans la suite de la description, le mode de réalisation dans lequel les étapes du procédé sont réalisées par l'équipement est détaillé. Cependant, la présente invention se rapporte au cas où le serveur effectue des opérations du procédé de manière complémentaire à l'équipement situé dans le véhicule lors de l'exécution du procédé.

Le procédé de l'invention permet de relever à des instants mesurés la position de l'équipement. On suppose que l'équipement est dans un véhicule en mouvement pour décrire le mode de réalisation de l'invention.

Selon d'autres modes de réalisation, l'équipement peut être intégré au véhicule par exemple dans son tableau de bord ou encore y être fixé par un support adapté.

On nomme dans la suite de la description indifféremment la vitesse de l'équipement et la vitesse du véhicule.

A titre d'exemple, lorsque les relevés sont réguliers, toutes les 30s par exemple, la position de l'équipement peut être capturée par l'équipement à intervalles fixes. Des coordonnées GPS ou des données provenant d'un réseau de téléphonie, tel qu'un réseau GSM peut également convenir à fournir une position géolocalisée de l'équipement à des intervalles de temps réguliers ou non. Ainsi la position peut être récupérée par diffusion d'un ou de plusieurs satellite(s) ou par triangulation entre bornes terrestres ou par une combinaison des deux. Selon une variante de réalisation, la position peut être récupérée par un réseau sans fil, ou une connexion optique ou filaire à partir d'un second équipement. Les relevés sont horodatés et peuvent donc s'affranchir d'une régularité de période de capture.

Les données peuvent être capturées dans des intervalles de temps plus courts allant jusqu'à quelques centièmes de secondes. Dans ce cas, on distingue la capture de la position et son traitement par un équipement mettant en oeuvre le procédé de l'invention. Par exemple, un équipement peut recevoir une nouvelle position horodatée approximativement toutes les 30ms mais il peut n'en traiter qu'une toute les 20s. Ainsi la fréquence moyenne de réception des positions n'est pas forcément identique à la fréquence de traitement d'une position. On nomme fréquence moyenne lorsque les positions ne sont pas reçues à intervalles réguliers.

Dans la figure 1, à titre d'exemple la position POS de l'équipement est une position GPS obtenue par satellite. Dans ce cas, l'équipement comprend les capteurs adaptés à recevoir les positions ainsi délivrées.

Selon un mode de réalisation, le procédé permet d'horodater les relevés de positions POS au moyen d'une horloge HOR(Tc), Tc étant la période, possiblement variable, entre deux relevés successifs traités. On note alors des « relevés des positions » : des positions horodatées reçues et traitées selon le procédé de l'invention.

On peut également considérer dans une autre variante que le procédé de l'invention récupère des positions déjà horodatées en amont.

On a $T_c(i) = t_{i+1} - t_i$, avec $t_i$ l'instant de traitement d'une position $POS_i$ reçues par l'équipement, $T_c$ est notée la période de capture, selon les modes de réalisation de l'invention la période de capture peut varier selon les instants de mesure ti ou être constante si les instants de mesure sont effectués à intervalle de temps régulier.

Connaissant les positions horodatées de l'équipement, le procédé de l'invention est capable de calculer à chaque relevé la vitesse instantanée calculée à partir des deux dernières positions successives reçues.

Ayant obtenu les vitesses instantanées à chaque relevé, le procédé de l'invention permet de déduire les accélérations entre chaque relevé et la durée de chaque accélération/ décélération en fonction de la mesure de Tc(i) possiblement variable d'une mesure à l'autre.

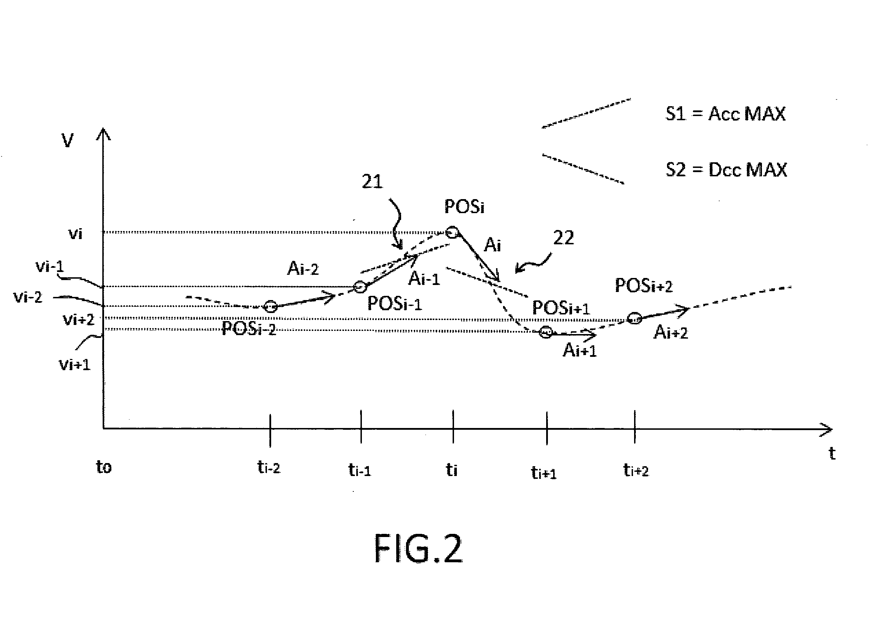

La figure 2 illustre un graphique permettant de représenter le temps t en fonction de la vitesse v du véhicule. A chaque position $POS_i$, le véhicule a une vitesse $v_i$.

- 
$$V_i = (POS_i - POS_{i-1}) / (t_i - t_{i-1}) = \Delta_i / T_c(i), \text{ avec } \Delta_i = POS_i - POS_{i-1}$$

- 
$$A_i = (V_i - V_{i-1}) / (t_i - t_{i-1}) = \Delta_i^2 / T_c(i)$$

$A_i$ représente l'accélération ou la décélération entre la position $POS_{i-1}$ et $POS_i$.

Les accélérations peuvent être calculées par déduction des vitesses instantanées à partir des relevés des positions horodatées du véhicule.

Selon un autre mode de réalisation, les accélérations peuvent être déduites des mouvements de la pédale d'accélération par une mesure de l'enfoncement de la pédale ou une variation de régime du moteur. Lorsque ces données sont disponibles par exemple au niveau du tableau de bord, le procédé de l'invention peut permettre une configuration pour que l'équipement mettant en oeuvre le procédé de l'invention récupère les données d'enfoncement de pédale ou une variation de régime du moteur et les comparer à des seuils prédéfinis. La liaison entre l'équipement et le tableau de bord peut être assurée par l'intermédiaire de la connexion au BUS CAN véhicule ou à une autre interface du réseau électronique de bord du véhicule, notamment par une liaison physique ou par une connexion Bluetooth ou n'importe quelle autre liaison sans fil permettant un échange de données.

Dans le cas d'exemple détaillé dans la présente description, les accélérations sont déduites des relevés de positions horodatées du véhicule.

Sur la figure 2, le procédé de l'invention permet de comparer les différentes accélérations calculées $A_{i-2}$, $A_{i-1}$, $A_i$, $A_{i+1}$, $A_{i+2}$ avec un seuil de décélérations $S_2$ et un seuil d'accélération $S_1$. A titre d'exemple, la figure 2 représente les seuils sous forme de pente $S_1$ : Acc MAX et S2 = Dcc MAX. Les accélérations peuvent être calculées ainsi que leur durée respective, notée $D_{ACC}$ et $D_{DCC}$.

Acc MAX représente l'accélération maximale non prise en compte dans le pondérateur du procédé de l'invention et Dcc MAX représente la décélération en valeur absolue maximale non prise en compte dans le pondérateur du procédé de l'invention.

On observe sur le graphique de la figure 2 que les points 21 et 22 correspondent à des variations de vitesses, donc des accélérations, qui dépassent respectivement le premier seuil $S_1$ et le second seuil $S_2$.

Le procédé de l'invention permet de comptabiliser ces dépassements et leur durée dans un compteur COMPT lorsque les différences $t_{i+1}$-$t_i$ sont variables d'une mesure à l'autre. Le compteur peut comprendre un comptage séparé d'une part des accélérations et d'autre part des décélérations et de leur durée dépassant respectivement les seuils $S_1$, $S_2$ ou peut être qu'un seul compteur.

Les seuils $S_1$ et $S_2$ peuvent être avantageusement définis pour des durées de référence permettant de comparer des accélérations et décélérations ainsi que leur durée en fonction d'un référentiel commun à toutes les mesures.

Le procédé de l'invention permet de générer un pondérateur prenant en compte le nombre d'accélérations et de décélérations pendant un intervalle de temps donné et/ou la durée de chaque accélération et décélération.

Selon les variantes de réalisation, le procédé de l'invention peut être configuré pour prendre en compte différents seuils $S_1$, $S_1$', $S_1$" qui peuvent correspondre à différents paliers d'accélérations ou de décélérations (respectivement $S_2$, $S_2$', $S_2$").

Dans une autre variante, les accélérations et les décélérations ne participent pas de manière équivalente dans le pondérateur. On peut considérer, par exemple, qu'une accélération contribue à une plus forte surconsommation de carburant qu'une décélération. Dans un mode simplifié, seules les accélérations contribuent dans la définition du pondérateur. Dans la présente description, les décélérations et les accélérations contribuent de manière équivalente dans le pondérateur.

Selon un mode de réalisation simple, lorsqu'une accélération ou une décélération dépasse respectivement le premier ou le second seuil $S_1$, $S_2$, une mise en oeuvre du procédé permet d'incrémenter le compteur, noté COMPT, d'une valeur égale à 1. Ce compteur peut prendre en compte les durées respectives des accélérations et décélérations.

Dans l'exemple de la figure 2, entre les relevés $POS_{i-2}$ et $POS_{i+2}$, le compteur COMPT a été incrémenté d'une valeur égale à 2 relativement aux points 21 et 22 qui comptabilisent des dépassements de seuils.

Ainsi selon les modes de réalisations un pondérateur $C_{portion}$ permet de générer une valeur, qui sera dans la suite du procédé utilisée comme facteur multiplicateur d'un paramètre représentatif de la conduite sur une portion de trajet.

Le procédé de l'invention permet donc de définir une notion de portion de trajet. La portion de trajet peut être définie par une distance ou une durée. Dans ce dernier cas, une durée peut être exprimée sous forme d'un certain nombre de périodes de capture de position $T_c(i)$, où $T_c(i)$ est une période variable ou constante selon le mode de réalisation de l'acquisition des positions $POS_i$. Nommons $P_o(k)$ la $k^{ième}$ portion du trajet.

$P_o(k) = N \cdot T_c(i)$, où N est un entier positif prédéterminé.

Dans cet exemple, toutes les portions $P_o(k)$ ont une durée égale.

Dans un premier exemple, N = 50 et $T_c(i)$ est approximativement égal à 30s à l'écart type près entre les mesures de Tc(i) et Tc(q) prises dans l'intervalle de temps considéré

Dans ce cas, Po = 1500 s, soit 25 min.

Dans un second exemple, N = 15 et $T_c(i) \approx 10s$.

Dans ce cas, Po = 1500s, soit 2,5 min.

Dans un troisième exemple, N = 20 et $T_c(i) \approx 20s$.

Ce dernier exemple correspond à un mode qui permet de définir un bon compromis entre les erreurs effectuées de localisation et l'établissement d'une vitesse moyenne $V_M$ correspondant à une allure réaliste du véhicule.

Tc(i) peut être également de l'ordre de quelques millièmes de secondes.

Le procédé de l'invention permet notamment de traiter les relevés correspondants à des aberrations. Typiquement, les vitesses instantanées dépassant un certain seuil peuvent ne pas être prises en compte. Ces dépassements peuvent survenir dans des cas aux limites. Un cas de figure peut se produire en sortie de tunnel où des relevés ont manqué et provoquent de ce fait une vitesse anormalement élevée.

Selon les modes de réalisation de l'invention, les portions Po(k) peuvent définir des courtes ou des longues durées selon la configuration envisagée.

Lorsque le pondérateur est défini sur une portion, il est alors appelé coefficient de portion $C_{portion}$. Il peut être normalisé de sorte à représenter un coefficient compris entre 0 et 1 ou entre 1 et 2. Le coefficient de portion permet de passer d'une valeur d'un paramètre de conduite théorique à une valeur de ce même paramètre prenant en compte le type de conduite d'un conducteur. Typiquement, il est possible de constater une différence entre une conduite saccadée et une conduite fluide. Par ailleurs, il est possible de différencier une conduite comportant de nombreux changements de vitesses d'une conduite plus coulée c'est-à-dire comportant moins de changements de vitesses. Lorsqu'une conduite comporte peu de changements de vitesses, elle traduit par exemple une meilleure anticipation du conducteur vis-à-vis de la route et elle peut donc être valorisée par une génération d'un indicateur de conduite reflétant cette conduite.

Les coefficients de portion $C_{portion}$ permettent de pondérer un paramètre CON_POND représentatif d'un trajet comme par exemple une valeur de consommation en carburant, ou un taux d'émission en $CO_2$ ou encore un coût associé au trajet ou encore d'une note, i.e. un score, affectée au trajet.

Le trajet comprend K portions, chaque coefficient de portion $C_{portion}$ peut être sommé ou intégré ensemble avec d'autres données de sorte à définir un coefficient de conduite sur un trajet, il est noté $C_{conduite}$.

Le procédé de l'invention offre un mode privilégié de réalisation par l'établissement d'un calcul du coefficient de conduite $C_{conduite}$ en fonction de données propres au véhicule.

Le procédé permet de prendre en compte un profil de véhicule par exemple par l'intermédiaire d'une interface d'un équipement mettant en oeuvre le procédé de l'invention. Un utilisateur peut acquérir des données propres au véhicule telles que par exemple :

- un identifiant, un type, une marque, un modèle de véhicule ;
- un type de transmission : boite automatique, boite manuelle, nombre de vitesses ;
- un type de carburant ;
- une quantité de $CO_2$ émis par km selon le carburant et modèle de véhicule ;
- un profil de consommation $P_{Ci}$ du véhicule.

Un profil de consommation $P_{Ci}$ peut être prédéterminé en fonction par exemple d'un carburant et d'un modèle de véhicule et d'un type de zone dans laquelle le véhicule circule. Il représente une consommation de carburant cible $C_{cible}$ sur une distance définie dans une zone donnée, il peut être exprimé de cette manière :

$C_{cible}$= 51 / 100km. Nous nommons cette consommation : « consommation cible », notée $C_{cible}$, car elle correspond à une donnée constructeur valable pour une zone donnée.

En effet, un véhicule roulant en ville ou sur une voie rapide peut avoir des profils de consommation en carburant de différentes natures.

Le profil véhicule peut comprendre un profil de consommation $P_{Ci}$ en fonction de zones prédéfinies. Par exemple, une zone urbaine, une zone de route et une zone mixte comprenant des passages en zone urbaine et des passages sur voie rapide peuvent être définies.

Chaque zone $Z_i$ comprend une consommation en carburant cible $C_{cible}$. Nommons $Z_1$ la zone urbaine, $Z_2$ la zone mixte et $Z_3$ la zone de voies rapides. Chaque zone $Z_i$ est associée à une vitesse cible $V_{cible}$ ou à une tranche cible de vitesses cibles dans laquelle un véhicule circule.

A titre d'exemple, la tranche < 50 km/h peut définir une zone urbaine. La tranche [50 km/h ; 80 km/h] peut définir une zone mixte et la tranche > 80 km/h peut définir une zone de voies rapides.

Le procédé de l'invention peut être adapté à un nombre plus élevé de zones et des tranches différentes.

L'association d'une zone $Z_i$ et d'une consommation $C_{cible}$ correspond à un profil de portion $T_i$. En conséquence, un profil de portion $T_i$ comprend au moins une donnée d'un profil véhicule associée à un type de zone $Z_i$.

Le type de zone est en théorie objectivement défini par la nature de la voie et de sa localisation. Mais selon les modes de réalisations de l'invention, un type de zone peut être déduit d'une allure du véhicule, par exemple sa vitesse moyenne sur une portion, qui reflète une probabilité de se trouver dans une zone donnée. A titre d'exemple, une vitesse moyenne de 130 km/h correspond à une déduction que le véhicule roule sur une voie rapide de type autoroute. Selon un autre exemple, une vitesse cible de 45km/h sur l'autoroute correspond à un type de zone urbain (cas de bouchons) alors que le type de voie relève d'une voie rapide. De ce fait le type de zone est déduit d'une mesure d'allure du véhicule et ne correspond pas forcément à la nature objective de la voie. Selon un autre mode de réalisation, le type de zone pourrait être déduit d'une donnée de cartographie et correspondrait objectivement à la nature de la voie.

Dans la présente description, il est décrit le mode selon lequel le type de zone est déduit de l'allure du véhicule sur une portion, ce qui permet de définir un profil de portion Ti.

Selon un mode de réalisation, les types de zones Zi permettent de définir des seuils $S_2$, $S_1$ adaptés aux mesures et au dénombrement des accélérations et décélérations du véhicule.

La définition des seuils S1, S2 dépend donc selon ce mode de réalisation des zones considérées.

Une autre donnée du profil de consommation peut être le taux de $CO_2$ émis dans l'atmosphère par le véhicule après un certain volume de carburant consommé ou une certaine distance parcourue.

Le procédé de l'invention permet de charger les données du profil de véhicule à partir d'une connexion réseau par exemple de type GPRS, Edge, 3G ou 4G ou en wifi, lesdites données étant stockées sur un serveur distant.

La figure 1 représente un tel serveur 10 comprenant une base de données BD comprenant des données de véhicules connues et existantes.

L'équipement mettant en oeuvre le procédé peut se connecter sur demande ou automatiquement au serveur 10 via le réseau R. Un identifiant et un mot de passe peuvent être nécessaires selon la configuration souhaitée.

Le profil du véhicule $P_v$ est ainsi récupéré dans une mémoire de l'équipement. Selon des variantes de réalisation, tout le profil véhicule $P_v$ est récupéré avant le départ du trajet ou peut l'être pendant le trajet. Certaines données peuvent être téléchargées en cours de trajet si elles sont nécessaires. Typiquement, le prix du carburant peut être une donnée du profil du véhicule $P_v$ réajustée selon la localisation du véhicule et donc retéléchargée en cours de trajet. Ce réajustement peut être effectué en prenant en compte les tarifs moyens du carburant du véhicule pris dans les stations-service à proximité de sa localisation ou en effectuant une moyenne entre ces différents tarifs. Selon une alternative, le tarif du carburant peut être saisi par l'utilisateur.

Le procédé de l'invention permet de calculer la vitesse moyenne $V_M$ d'un véhicule dans une portion donnée $P_o(k)$, pouvant être noté $\{V_M\}_{Pk}$. Ce calcul est effectué à partir de l'estimation des vitesses instantanées $v_i$ sur cette même portion ou à partir des relevés aux extrémités de la portion.

Un calcul selon les deux méthodes permet de déduire éventuellement les points d'arrêts et leur nombre.

La vitesse moyenne $V_M$ calculée sur une portion permet de sélectionner une tranche correspondante de vitesse cible $V_{cible}$ en comparant la vitesse moyenne $V_M$ à la vitesse cible $V_{cible}$ ou la tranche cible. Les vitesses cibles étant associées à des zones, il est possible à partir d'une mesure d'une vitesse moyenne $V_M$ sur une portion de déduire une zone de conduite $Z_i$ associée.

Si la vitesse moyenne $V_M$ est de 55 km/h, alors le procédé de l'invention permet de déduire que le véhicule roule dans une zone mixte $Z_2$ selon les exemples de tranches cibles définies précédemment. Un profil de consommation de carburant $P_{Ci}$ associé à ladite zone peut être sélectionné.

Ainsi à partir des relevés de positions horodatés d'une portion $P_o(k)$ de trajet, le procédé permet de :

- déterminer une vitesse moyenne $V_M$ pour sélectionner un profil de consommation $P_{Ci}$ ;
- déterminer des accélérations et décélérations ainsi que leurs durées dépassant des seuils prédéfinis pour en déduire un pondérateur.

Ces deux étapes permettent de générer un indicateur de conduite $C_{conduite}$ permettant à un conducteur d'apprécier sa conduite vis-à-vis d'une conduite de référence, ou une conduite cible. Il peut ainsi progresser de sorte à obtenir un indicateur de conduite reflétant une conduite de plus en plus responsable selon les principes de l'éco-conduite et de la sécurité.

L'indicateur de conduite $C_{conduite}$ peut être employé, par exemple, pour pondérer un paramètre de trajet tel que la consommation, notamment la consommation cible d'une zone donnée pour un véhicule donné. Si la consommation cible, notée $CONS_{cible}$, sur une portion $P_o(k)$ d'une zone $Z_i$ donnée d'un profil de consommation $P_{Ci}$ est la consommation pondérée par le coefficient $C_{conduite}$, alors on peut en déduire une évaluation de la consommation réelle du véhicule notée $CONS_{POND}$.

On peut écrire la relation:

$$CONS_{POND} = C_{conduite} \cdot CONS_{cible} \; ;$$

Cette équation appliquée sur l'ensemble des portions $P_o(k)$ du trajet permet d'écrire :

$$C1_{trajet} = \Sigma \; CON_{POND} = \Sigma \; (C_{conduite} \cdot CONS_{cible})$$

Où $C1_{trajet}$ représente la consommation estimée du trajet prenant en compte les attitudes de conduite d'un conducteur.

Si $C1_{cible}$ est la consommation cible du trajet, ce dernier pouvant comprendre potentiellement différents types de zones ($Z_1$, $Z_2$, $Z_3$), alors :

$$C1_{trajet} - C1_{cible} = \Delta_{conduite}$$

$\Delta_{conduite}$ correspond à l'écart de conduite générant une surconsommation.

L'indicateur de conduite $C_{conduite}$ sur une portion $P_o(k)$ ou l'indicateur de conduite $C1_{trajet}$ sur un trajet peut pondérer un paramètre de prix PRIX_POND, notamment du prix du carburant en fonction d'un prix cible et d'une consommation cible. La consommation cible définie sur un trajet prend en compte différents profils de consommations issues éventuellement de zone de différentes natures, donc ayant des consommations différentes.

Selon une autre variante, l'indicateur de conduite $C_{conduite}$ sur une portion ou l'indicateur de conduite $C1_{trajet}$ sur un trajet peut pondérer un paramètre de quantité d'émission de $CO_2$, notamment de la quantité de $CO_2$ émise au regard d'une quantité de $CO_2$ émise cible. La quantité d'émission de $CO_2$ cible définie sur un trajet prend en compte différents profils d'émission de $CO_2$ cibles issues éventuellement de zones de différentes natures, donc ayant des profils d'émission différents.

Selon une variante de réalisation, un score peut être généré à l'issu du trajet, le score reflète un écart positif ou négatif au regard d'un paramètre tel que la consommation de carburant, du prix du carburant ou l'émission de $CO_2$ du trajet. Ce score peut être utilisé pour générer un indice d'apprentissage ou des points de fidélité pour une enseigne spécifique.

Le trajet peut comprendre un identifiant $Id_{trajet}$ auquel est rattaché chaque portion $P_o(k)$ dudit trajet.

Selon une première variante de réalisation, comme détaillée dans la présente description, les étapes du procédé de l'invention sont réalisées sur un équipement. Parmi les étapes du procédé réalisées sur ledit équipement, on compte la capture des relevés de positions, les calculs de vitesses moyennes, les calculs des accélérations et décélérations, les opérations de comparaison à des seuils ainsi que les calculs de coefficients de portion et les indicateurs de conduite.

Selon une seconde variante de réalisation, l'équipement peut recevoir les relevés de position et les transmettre à un serveur distant qui peut être le même que celui comprenant les profils véhicules ou un autre serveur distant. Dans ce cas, les calculs de vitesses moyennes, d'accélération ainsi que les coefficients de portion $C_{portion}$ et les indicateurs de conduite $C1_{trajet}$ peuvent être réalisés par le serveur distant. Ce dernier est alors en mesure de renvoyer les résultats finaux à la fin du trajet à l'équipement en intégrant sur chaque portion $P_o(k)$ les valeurs calculées à partir des coefficients de portion $C_{portion}$ et des indicateurs de conduite $C_{conduite}$ et C1 trajet obtenus par le procédé de l'invention. Cette variante permet de préserver une partie de l'énergie de l'équipement.

Dans tous les cas de figure, une synchronisation entre un équipement et un serveur distant peut être établie en fin de trajet ou pendant le trajet afin de sauvegarder les résultats obtenus du trajet.

Le procédé de l'invention permet d'exploiter les résultats obtenus également par la génération d'un indicateur de conduite amélioré reflétant les bonnes pratiques d'un conducteur et les effets de bords des relevés collectés. Typiquement, un certain nombre d'accélérations et de décélérations au-delà de seuils peut être consentis à cause des aléas de la route, il est donc possible de configurer le pondérateur de sorte ne pas prendre en compte un certain nombre d'accélérations ou de décélérations inhérentes au trajet. A titre d'exemple, si le trajet comprend une bretelle d'accès à une autoroute, alors le trajet comprend une voie d'accélération dans laquelle il est normal que le véhicule accélère plus qu'à la normale. Ainsi, cette configuration permet d'ajuster l'algorithme mis en oeuvre par le procédé de l'invention à des cas particuliers. Selon ce mode de réalisation, le procédé de l'invention permet un couplage à une cartographie comportant des segments pour lesquels certains pondérateurs peuvent être adaptés au cas par cas.

Selon un mode de réalisation de l'invention, le profil de portion est remis à zéro avant chaque trajet. Il peut être également sauvegardé. Un avantage du procédé de l'invention, lorsque l'équipement est un équipement nomade de type Smartphone, est qu'il peut être compatible d'une pluralité de véhicules par un simple chargement du profil de véhicule au départ du trajet ou pendant.

Le procédé est ainsi possiblement mis en oeuvre par un équipement par exemple au moyen d'une application. L'application peut permettre une identification d'un utilisateur. Elle peut conserver un historique, établir des moyennes selon les précédents trajets et rendre possible toute exploitation des données précédemment collectées sur l'équipement. Un profil utilisateur peut donc être défini au moyen d'un identifiant personnel et d'un mot de passe et éventuellement le profil peut être associé à un véhicule principal et/ou un véhicule secondaire. Cette association permet de faciliter le chargement des données du véhicule en fonction de la connexion par l'utilisateur.

Un autre objet de l'invention concerne un procédé de génération d'un indicateur de sévérité d'usage des pièces. Un ensemble de pièces est répertorié dans une mémoire, chacune des pièces étant associée à un paramètre d'usage $P_{UP}$ pondéré soit par un coefficient de trajet $C_{trajet}$ soit par un indicateur de conduite $C_{conduite}$, la valeur d'un paramètre d'usage d'au moins une pièce $P_{UP}$ étant mise à jour après au moins un usage dudit véhicule.

Un avantage du procédé de génération d'un indicateur de sévérité d'usage des pièces est qu'il peut être réalisé à partir de l'indicateur de conduite du procédé d'assistance à la conduite d'un véhicule de la présente invention. Selon un autre mode de réalisation, il peut être généré à partir d'un coefficient de trajet.

Selon un mode de réalisation, la mise à jour de la valeur du paramètre d'usage est établie après chaque usage du véhicule et que les pièces répertoriées comprennent au moins l'une des pièces suivantes : un Pneu, une plaquette de frein, un disque d'embrayage, un disque de frein, un balai essuie vitre.

Le tableau ci-dessous permet d'associer les quantités de matière dispersée dans l'environnement selon les différentes pièces du véhicule concernées :

| Composant/équipement | Emission - Dispersion |
|---|---|
| Les pneus | Gomme |
| Les plaquettes de freins | Produit de friction |
| Le disque d'embrayage | Produit de friction |
| Les disques de frein | Acier, Céramique |
| Les balais essuie vitre | Caoutchouc |

Des mesures réalisées permettent d'évaluer le comportement de conduite par exemple au moyen de l'indicateur de conduite généré par le procédé de l'invention sur chaque paramètre d'émission et de dispersion de chacune des pièces. Avantageusement, l'indicateur de conduite généré par le procédé de l'invention permet de pondérer une ou plusieurs données relatives les émissions et dispersions de certaines pièces du véhicule.

Les différents paramètres retenus dans la prise en compte de l'évaluation de l'émission ou la dispersion de matière de certaines pièces sont synthétisées dans le tableau suivant :

| Paramètres pris en compte | Nature |
|---|---|
| Vitesse | km/h |
| Variation de vitesse | Accélération en $ms^2$<br>Freinage en $ms^2$ |
| Durée des variations de vitesses | Temps en seconde |
| Nombre de variations de vitesses | Quantité |
| Nature de la portion de trajet | Urbain, Voie rapide, Mixte |

L'un au moins de ces paramètres peut être pris en compte. Un avantage de l'invention est de permettre d'utiliser l'indicateur de conduite ou encore le coefficient de trajet pour pondérer l'évaluation de l'usure des pièces ou les émissions ou les dispersion de matière liées à l'usure des pièces.

Le tableau suivant synthétise le lien entre les différents paramètres de la conduite pris en compte et leur influence sur l'usure des pièces ou les émissions ou les dispersions de matière liées à l'usure des pièces.

- +++ : désigne une « influence très importante »
- ++ : désigne une « influence importante »
- + : désigne une « influence moyenne »
- 0 : désigne « aucune influence »

| Composant / équipement | Vitesse | Accélération | Freinage | Durée var | Nb. var | Nature |
|---|---|---|---|---|---|---|
| Les pneus | 0 | ++ | +++ | +++ | ++ | + |
| Les plaquettes de freins | 0 | 0 | +++ | +++ | +++ | ++ |
| Le disque d'embrayage | 0 | ++ | 0 | 0 | + | ++ |
| Les disques de frein | 0 | 0 | ++ | ++ | + | 0 |
| Les balais essuie vitre | ++ | 0 | 0 | 0 | 0 | ++ |

Un autre objet de l'invention concerne un procédé de génération d'un indicateur de sévérité d'usage des fluides. Un ensemble de fluides est répertorié dans une mémoire, chacun des fluides étant associé à un paramètre d'usage $P_{UF}$ pondéré soit par un coefficient de trajet $C_{trajet}$ soit par un indicateur de conduite $C_{conduite}$, la valeur d'un paramètre d'usage $P_{UF}$ d'un fluide correspondant à un état de vidange dudit fluide, ladite valeur du paramètre d'usage $P_{UF}$ d'au moins un fluide étant mise à jour après au moins un usage dudit véhicule.

Pour le fonctionnement de nombreux composants et équipements du véhicule, différents fluides sont mis en oeuvre. Ces fluides sont généralement collectés par les réseaux d'entretien parce qu'ils constituent des polluants majeurs si dispersés dans l'environnement. Ils entrent donc bien dans les produits pour lesquels une réduction des quantités utilisées apporte un bénéfice à l'environnement. Le procédé de l'invention permet de réduire la quantité de fluides utilisés dans les différents équipements répondant ainsi à la problématique.

Un avantage du procédé de génération d'un indicateur de sévérité d'usage des fluides est qu'il peut être réalisé à partir de l'indicateur de conduite du procédé d'assistance à la conduite d'un véhicule de la présente invention. Selon un autre mode de réalisation, il peut être généré à partir d'un coefficient de trajet.

Selon un mode de réalisation, la mise à jour de la valeur du paramètre d'usage d'un fluide $P_{UF}$ est établie après chaque usage du véhicule et que les fluides répertoriés comprennent au moins l'un des fluides suivants : les huiles moteur, les huiles de boites de vitesses, les huiles de direction assistée, les huiles de ponts ou les liquides de refroidissement.

Le tableau suivant représente les fluides et leur composante polluante associée :

| **Fluides** | **Polluant** |
|---|---|
| Les huiles moteur | Huile - produit pétrolier |
| Les huiles de boite de vitesses | Huile - produit pétrolier |
| Les huiles de direction assistée | Huile - produit pétrolier |
| Les ponts | Huile - produit pétrolier |
| Liquide de refroidissement | Alcool |

Il est possible d'établir un lien entre un indicateur de conduite et chacune des consommations de ces fluides en reprenant les différents paramètres de conduite ci-dessous :

| **Paramètres pris en compte** | **Nature** |
|---|---|
| Vitesse | km/h |
| Variation de vitesse | Accélération en ms$^2$<br>Freinage en ms$^2$ |
| Durée des variations de vitesse | Temps en seconde |
| Nombre de variations de vitesse | Quantité |
| Nature de la portion de trajet | Urbain, Voie rapide, Mixte |

Les résultats des essais réalisés visant à tracer une influence d'un paramètre de conduite sur la consommation de ces fluides sont représentés dans le tableau suivant :

| **Composant / équipement** | **Vitesse** | **Accélérati on**. | **Freinage** | **Durée var** | **Nb. var** | **Nature** |
|---|---|---|---|---|---|---|
| **Les huiles moteur** | + | + | 0 | ++ | +++ | +++ |
| **Les huiles de boite de vitesse** | ++ | + | 0 | ++ | ++ | ++ |
| **Les huiles de direction assistée** | + | 0 | 0 | 0 | + | + |
| **Les ponts** | + | ++ | 0 | + | + | + |
| **Liquide de refroidissement** | 0 | ++ | 0 | + | + | + |

On note les différents critères utilisés suivants :

- +++ : désigne une « influence très importante »
- ++ : désigne une « influence importante »
- + : désigne une « influence moyenne »
- 0 : désigne « aucune influence ».

Ainsi l'indicateur de sévérité d'usage des pièces et l'indicateur de sévérité d'usage des fluides de l'invention répondent au même problème technique exposé à savoir comment apprendre à un conducteur ou de le sensibiliser à une conduite optimisant une donnée écologique et de sécurité telle que par exemple la surconsommation de carburant et l'agressivité au volant liée au comportement de conduite. Cet indicateur de conduite peut avoir un impact sur l'usage des pièces et des fluides. De ce fait améliorer sa conduite contribue à diminuer la nuisance écologique de ces composants et équipements.

**Revendications**

1. Procédé d'assistance à la conduite d'un véhicule, **caractérisé en ce qu'**il comprend :

   • Une configuration permettant de définir un profil de véhicule ($P_v$), ledit profil de véhicule comprenant au moins :

   ▪ un identifiant ($Id_v$) permettant de discriminer un modèle de véhicule ;
   ▪ un type de carburant ;
   ▪ un profil de consommation ($P_{Ci}$) comprenant un ensemble de consommations moyennes ($C_i$), chaque consommation moyenne étant associée à un type de zone ($Zi$) ;

   • Une acquisition d'un premier ensemble de relevés de positions ($\{POS_i\}_{P1}$) du véhicule à des instants de mesure ($t_i$), définissant une période de capture ($T_c(i)$), sur une première portion ($P_1$) de trajet ;
   • Une détermination sur ladite première portion ($P_1$) :

   ▪ d'un nombre d'accélérations ($N_{Acc}$) du véhicule dépassant un premier seuil ($S_1$) prédéfini, le nombre d'accélérations étant déterminé à partir des relevés de position ($\{POS_i\}_{P1}$) du véhicule à des instants de mesure ($t_i$) sur une première portion ($P_1$) de trajet ;
   ▪ d'une vitesse moyenne ($\{V_M\}_{P1}$) du véhicule, le type de zone ($Zi$) étant défini par au moins une vitesse cible moyenne ($V_{cible1}$, $V_{cible2}$, $V_{cible3}$) d'un véhicule roulant dans ladite zone ($Z_i$);

   • un calcul d'un coefficient de portion ($C_{portion}$) à partir du dénombrement et de la durée des accélérations sur ladite première portion ($P_1$);
   • Une déduction d'un profil de portion ($TR_i$) à partir de la vitesse moyenne ($\{V_M\}_{P1}$) du véhicule calculée sur la première portion de trajet ($P_1$) comparée à au moins une donnée ($C_{id}$) du profil véhicule ($P_v$) ;
   • Une pondération d'au moins une donnée ($C_{id}$) du profil de portion ($TR_i$) de sorte à générer un indicateur de conduite ($C_{conduite}$).

2. Procédé d'assistance à la conduite d'un véhicule selon la revendication 1, **caractérisé en ce que** le procédé comprend :

   ▪ un calcul du nombre ($N_{Dcc}$) de décélérations au-delà d'un second seuil ($S_2$) en valeur absolue sur la première portion ($P_1$) et que le calcul du coefficient de portion ($C_{portion}$) est également une fonction du nombre ($N_{Dcc}$) de décélérations ainsi déterminé
   ▪ une détermination pour chaque accélération et/ou chaque décélération de leur durée ($D_{Acc}$, $D_{DCC}$), les périodes de capture étant variables ;
   ▪ un calcul du coefficient de portion ($C_{portion}$) en prenant en compte les durées de chaque accélération et/ou décélération sur ladite première portion ($P_1$).

3. Procédé d'assistance à la conduite selon l'une quelconque des revendications 1 à 2, **caractérisé en ce que** la définition du profil de véhicule est réalisée par le transfert de données stockées dans un serveur distant vers un terminal utilisateur conçu pour mettre en oeuvre le procédé de l'invention, lesdites données transférées comprenant un type de véhicule, des consommations de carburant définies selon des types de trajet ou des vitesses moyennes de conduite.

4. Procédé d'assistance à la conduite selon l'une quelconque des revendications 1 à 3, **caractérisé en ce que** :

   ▪ les valeurs d'accélérations supérieures à un premier seuil ($S_1$) sont comptabilisées dans un premier compteur ($C_1$) et les valeurs de décélérations inférieures à un second seuil ($S_2$) sont comptabilisées dans un second compteur ($C_2$), les valeurs comptabilisées définissant chacune un indice pondérateur ($Ip$) ;

■ les seuils d'accélérations ($S_1$) et de décélérations ($S_2$) sont définis selon chaque type de zone ($Z_i$).

5. Procédé d'assistance à la conduite selon la revendication 4, **caractérisé en ce que** les indices pondérateurs (Ip) définissent sur une première portion ($P_1$) un coefficient de portion ($C_{portion}$) sur ladite première portion ($P_1$).

6. Procédé d'assistance à la conduite selon l'une quelconque des revendications 1 à 5, **caractérisé en ce qu'**une vitesse moyenne ($\{V_M\}_{P1}$) du véhicule est calculée sur la première portion ($P_1$) à partir d'au moins deux relevés horodatés de la première portion ($P_1$), le calcul de la vitesse moyenne ($\{V_M\}_{P1}$) permettant d'attribuer à la première portion ($P_1$) un type de zone ($Zi$) d'un profil de portion ($\{Ti\}_{P1}$) par une comparaison d'une donnée du profil véhicule définie par l'ensemble des vitesses cibles ($V_{cible1}$, $V_{cible2}$, $V_{cible3}$) et de la vitesse moyenne mesurée ($\{V_M\}_{P1}$).

7. Procédé d'assistance à la conduite selon l'une quelconque des revendications 1 à 6, **caractérisé en ce que** :

■ un premier indicateur (CON_POND) de conduite est calculé sur la première portion ($P_1$) à partir :

• d'une première donnée d'un profil de conduite définie par une consommation moyenne identifiée ($C_{id}$) par la détection d'un type de zone d'un profil de portion ;
• du coefficient de portion ($C_{portion}$) calculé,

le coefficient de portion ($C_{portion}$) définissant un coefficient de pondération de la consommation moyenne identifiée ($C_{id}$) sur ladite première portion ($P_1$) et ;
■ un second indicateur (PRIX_POND) de conduite est calculé sur la première portion à partir :

• d'une seconde donnée d'un profil de conduite définie par un premier prix d'un type de carburant défini par le profil de véhicule ;
• du premier indicateur de conduite (CON_POND),
le premier prix du type de carburant du profil de véhicule étant identifié à partir d'une base de données répertoriant un ensemble de prix de carburants.

8. Procédé de génération d'un indicateur de trajet, **caractérisé en ce qu'**il comprend l'itération d'un procédé d'assistance à la conduite sur un ensemble de portions de trajet selon l'une quelconque des revendications 1 à 7, l'ensemble des premiers coefficients de portion ($C_{portion}$) définissant un coefficient de trajet ($C_{trajet}$).

9. Procédé de génération d'un indicateur de sévérité d'usage des pièces selon l'une quelconque des revendications précédentes, **caractérisé en ce qu'**un ensemble de pièces est répertorié dans une mémoire, chacune des pièces étant associée à un paramètre d'usage ($P_{UP}$) pondéré soit par un coefficient de trajet ($C_{trajet}$) soit par un indicateur de conduite ($C_{conduite}$) calculé par le procédé de l'une quelconque des revendications 1 à 8, la valeur d'un paramètre d'usage d'au moins une pièce ($P_{UP}$) étant mise à jour après au moins un usage dudit véhicule.

10. Procédé de génération d'un indicateur de sévérité d'usage des pièces selon la revendication 9, **caractérisé en ce que** la mise à jour de la valeur du paramètre d'usage est établie après chaque usage du véhicule et que les pièces répertoriées comprennent au moins l'une des pièces suivantes : un pneu, une plaquette de frein, un disque d'embrayage, un disque de frein, un balai essuie vitre.

11. Procédé de génération d'un indicateur de sévérité d'usage des fluides selon l'une quelconque des revendications précédentes, **caractérisé en ce qu'**un ensemble de fluides est répertorié dans une mémoire, chacun des fluides étant associé à un paramètre d'usage ($P_{UF}$) pondéré soit par un coefficient de trajet ($C_{trajet}$) soit par un indicateur de conduite ($C_{conduite}$) calculé par le procédé de l'une quelconque des revendications 1 à 8, la valeur d'un paramètre d'usage ($P_{UF}$) d'un fluide correspondant à un état de vidange dudit fluide , ladite valeur du paramètre d'usage (PUF) d'au moins un fluide étant mise à jour après au moins un usage dudit véhicule.

12. Procédé de génération d'un indicateur de sévérité d'usage des pièces selon la revendication 11, **caractérisé en ce que** la mise à jour de la valeur du paramètre d'usage d'un fluide ($P_{UF}$) est établie après chaque usage du véhicule et que les fluides répertoriés comprennent au moins l'un des fluides suivants : les huiles moteur, les huiles de boite de vitesse, les huiles de direction assistée, les huiles de ponts ou les liquides de refroidissement.

13. Produit programme d'ordinateur destiné à être téléchargé sur un équipement d'aide à la conduite apte à mettre en oeuvre les étapes du procédé de l'une quelconque des revendications 1 à 12.

**14.** Equipement d'aide à la conduite, caractérisé en qu'il comprend :

- un premier composant réseau permettant d'accéder à un réseau de données sans fil ;
- une mémoire permettant de stocker des données provenant d'au moins un serveur distant (SERV) ;
- un second composant permettant d'acquérir une position de l'équipement en temps réel, les positions étant régulièrement rafraichies ;
- un calculateur permettant d'effectuer les calculs nécessaires à la mise en oeuvre des procédés de l'une quelconque des revendications 1 à 12.

**15.** Système d'aide à la conduite, **caractérisé en ce qu'**il comprend :

- un équipement d'aide à la conduite selon la revendication 14 ;
- au moins un serveur distant permettant de stocker :

  - un ensemble de profils de consommation ;
  - un ensemble de profils de véhicules ;
  - un ensemble de prix de type de carburant régulièrement mis à jour.

PORTION (i)

HOR (Tc) → POS(j)

$\{\Sigma Tc\}i$

POS(j) → Vi / Acc / Dcc

Vi / Acc / Dcc → VM

Vi / Acc / Dcc → Cportion

VM

Cportion

Pv → Cid / TRi → $C_{conduite}$

R

10

BD

$\Sigma$PORTION (i)

CON_POND(i)

PRIX_POND(i)

C1trajet

C1trajet

FIG.1

FIG.2

**EP 2 845 780 A1**

| | | Europäisches Patentamt<br>European Patent Office<br>Office européen des brevets | **RAPPORT DE RECHERCHE EUROPEENNE** | Numéro de la demande<br>EP 14 17 9549 |
|---|---|---|---|---|

**DOCUMENTS CONSIDERES COMME PERTINENTS**

| Catégorie | Citation du document avec indication, en cas de besoin,<br>des parties pertinentes | Revendication<br>concernée | CLASSEMENT DE LA<br>DEMANDE (IPC) |
|---|---|---|---|
| X<br>Y | EP 2 472 490 A1 (HONDA MOTOR CO LTD [JP])<br>4 juillet 2012 (2012-07-04)<br>* figures 3b,4 *<br>* alinéas [0017] - [0019] *<br>* alinéas [0021] - [0022] *<br>* alinéas [0028], [0031], [0032],<br>[0053] - [0055] *<br>* alinéa [0034] *<br>* alinéa [0050] *<br>& WO 2011/043111 A1 (HONDA GIKEN KOGYO KK)<br>14 avril 2011 (2011-04-14)<br>----- | 1,8,<br>13-15<br>2-7,9-12 | INV.<br>B60W40/09<br>B60W50/14<br>B60R16/023<br><br>ADD.<br>B60W50/00 |
| A | US 2013/173136 A1 (KIM YOUNG-CHOOL [KR] ET<br>AL) 4 juillet 2013 (2013-07-04)<br>* figure 3 *<br>* alinéas [0008], [0021], [0022] *<br>* alinéas [0025], [0026], [0028] *<br>* alinéa [0027] *<br>* alinéa [0031] *<br>----- | 1-15 | |
| Y | EP 2 497 672 A1 (RENAULT SA [FR])<br>12 septembre 2012 (2012-09-12)<br>* figures 3,4 *<br>* alinéas [0022], [0024], [0111] -<br>[0114] *<br>* alinéa [0029] *<br>* alinéas [0053] - [0055], [0061],<br>[0062] *<br>----- | 4,6 | DOMAINES TECHNIQUES<br>RECHERCHES (IPC)<br><br>B60W<br>B60R<br>B60K<br>G07C<br>G08G<br>G01C |
| Y | EP 2 434 466 A1 (OPTEX CO LTD [JP])<br>28 mars 2012 (2012-03-28)<br>* alinéas [0062] - [0067]; figure 5 *<br>----- | 2 | |
| Y | US 6 594 579 B1 (LOWREY LARKIN HILL [US]<br>ET AL) 15 juillet 2003 (2003-07-15)<br>* figure 5 *<br>* colonne 4, ligne 25-30 *<br>* colonne 10, ligne 27-37,48-54 *<br>----- | 3,6 | |

-/--

Le présent rapport a été établi pour toutes les revendications

| Lieu de la recherche | Date d'achèvement de la recherche | Examinateur |
|---|---|---|
| Munich | 5 février 2015 | Dubreuil, Cédric |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
.............................................................................................
& : membre de la même famille, document correspondant

EPO FORM 1503 03.82 (P04C02)

18

Europäisches
Patentamt

European
Patent Office

Office européen
des brevets

**RAPPORT DE RECHERCHE EUROPEENNE**

Numéro de la demande

EP 14 17 9549

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | "effiDriver, assistant d'éco conduite active", , 4 décembre 2012 (2012-12-04), XP055109967, Extrait de l'Internet: URL:http://www.savecode.org/wp-content/upl oads/2012/12/effiDriverPR_2012_12.pdf [extrait le 2014-03-26] * le document en entier * ----- | 3 | |
| Y | US 2013/090792 A1 (EOM KI TAE [KR] ET AL) 11 avril 2013 (2013-04-11) | 5,7 | |
| A | * alinéas [0047] - [0049] * ----- | 4 | |
| Y | EP 2 375 385 A1 (PROZESS CONTROL GMBH [DE]) 12 octobre 2011 (2011-10-12) * alinéas [0004], [0016], [0040] * ----- | 9-12 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 5 février 2015 | Dubreuil, Cédric |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

 

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 14 17 9549

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-02-2015

| Document brevet cité au rapport de recherche | | Date de publication | Membre(s) de la famille de brevet(s) | | Date de publication |
|---|---|---|---|---|---|
| EP 2472490 | A1 | 04-07-2012 | CN | 102576473 A | 11-07-2012 |
| | | | EP | 2472490 A1 | 04-07-2012 |
| | | | JP | 4955043 B2 | 20-06-2012 |
| | | | JP | 2011081559 A | 21-04-2011 |
| | | | US | 2012197517 A1 | 02-08-2012 |
| | | | WO | 2011043111 A1 | 14-04-2011 |
| US 2013173136 | A1 | 04-07-2013 | AUCUN | | |
| EP 2497672 | A1 | 12-09-2012 | EP | 2497672 A1 | 12-09-2012 |
| | | | FR | 2972412 A1 | 14-09-2012 |
| EP 2434466 | A1 | 28-03-2012 | CN | 102428504 A | 25-04-2012 |
| | | | EP | 2434466 A1 | 28-03-2012 |
| | | | JP | 5200222 B2 | 05-06-2013 |
| | | | JP | 2013080481 A | 02-05-2013 |
| | | | US | 2012066011 A1 | 15-03-2012 |
| | | | WO | 2010134548 A1 | 25-11-2010 |
| US 6594579 | B1 | 15-07-2003 | US | 6594579 B1 | 15-07-2003 |
| | | | US | 6988033 B1 | 17-01-2006 |
| US 2013090792 | A1 | 11-04-2013 | CA | 2761476 A1 | 05-04-2013 |
| | | | KR | 20130036948 A | 15-04-2013 |
| | | | US | 2013090792 A1 | 11-04-2013 |
| EP 2375385 | A1 | 12-10-2011 | EP | 2375385 A1 | 12-10-2011 |
| | | | WO | 2011124546 A1 | 13-10-2011 |

EPO FORM P0460

Pour tout renseignement concernant cette annexe : voir Journal Officiel de l'Office européen des brevets, No.12/82